# EUROPEAN PATENT APPLICATION

(11) **EP 4 593 108 A1**
(43) Date of publication of application: **30.07.2025**
(21) Application number: 23867975.7
(22) Date of filing: 29.08.2023
(51) Int. Cl.: H01M 4/139, H01M 4/1397, H01M 4/38, H01M 4/58, H01M 4/62, H01M 4/66

(54) **METHOD FOR PRODUCING ELECTRODE**

(30) Priority: 22.09.2022 JP 2022151946
(71) Applicant: Sanoh Industrial Co., Ltd., Shibuya-ku Tokyo 150-0002 (JP); National Institute of Advanced Industrial Science and Technology, Chiyoda-ku Tokyo 100-8921 (JP)
(72) Inventor: MAEDA, Yu, Koga-shi, Ibaraki 306-0041 (JP); SAKAGUCHI, Yoshiki, Koga-shi, Ibaraki 306-0041 (JP); TANAKA, Hideaki, Tsukuba-shi, Ibaraki 305-8560 (JP); YAMASHITA, Naoto, Tsukuba-shi, Ibaraki 305-8560 (JP); MUKAI, Takashi, Tsukuba-shi, Ibaraki 305-8560 (JP)
(74) Representative: Cabinet Netter
(86) International application number: PCT/JP2023/031119
(87) International publication number: WO 2024/062851

(57) **Abstract**

Provided is a method of producing an electrode capable of suppressing occurrence of electrode peeling and improving a production yield during vacuum-drying which is a producing step of an electrode.

A method of producing an electrode includes a step (S1) of kneading an electrode active material, a conductive auxiliary agent, and a binder to obtain a slurry, a step (S2) of applying the slurry onto a substrate, and a step (S3) of vacuum-drying the applied slurry, in which the kneading is performed by a heating and stirring treatment at 150°C or higher and 200°C or lower and a defoaming and stirring treatment.

## Description

### TECHNICAL FIELD

The present invention relates to a method of producing an electrode, and particularly relates to a method of producing an electrode suitable for an electrode for a battery.

### BACKGROUND ART

As a power source mounted on a vehicle or the like using electricity as a driving source or a power source mounted on an electrical product or the like such as a personal computer or a mobile terminal, a secondary battery capable of implementing a relatively high output and a high capacity such as a lithium ion secondary battery is used. Among these secondary batteries, particularly, a lithium ion secondary battery is preferable as a high-output power source for driving vehicles such as an electric vehicle (EV), a plug-in hybrid electric vehicle (PHV), and a hybrid electric vehicle (HV) since a lithium ion secondary battery is lightweight and has a high energy density, and it is expected that the demand thereof will increase more and more in the future.

In recent years, as one aspect of a secondary battery, various studies and developments have been made for practical use of a battery in which a solid electrolyte in a form such as a powder, a pellet shape, or a plate shape molded by sintering is used instead of a liquid electrolyte (electrolytic solution), that is, a secondary battery in a form also referred to as a so-called all-solid-state battery.

In addition, a fuel cell that receives hydrogen and oxygen as fuel from the outside and causes the hydrogen and oxygen to react with each other to electrically extract energy generated when water is generated is also expected as clean energy having high energy efficiency and having only water as a discharge.

The electrode used in these batteries can be typically produced by preparing a slurry by mixing a conductive auxiliary agent or a binder with an electrode active material, applying the slurry onto a substrate such as a current collector, for example, and then vacuum-drying the slurry to form a plate-like body, pressing the plate-like body obtained, and then punching or cutting the plate-like body into an electrode shape.

As a kneading method of preparing a slurry, a defoaming stirring method such as vacuum depressurization, use of ultrasonic waves, or centrifugal separation has been conventionally used (see, for example, Patent Documents 1 and 2) .

However, each of these defoaming stirring methods has advantages and disadvantages, and when developing a sufficiently mixed electrode material, no matter which method is used, the disadvantages of the method may become a barrier to obtaining an electrode material of the desired quality.

On the other hand, it was found that the newly proposed method using a rotation-revolution type mixer can efficiently and sufficiently knead and defoam as compared with the defoaming stirring method described above, and an electrode material with good quality can be obtained.

### RELATED ART DOCUMENT

### PATENT DOCUMENT

Japanese Patent No. 5148036
Japanese Unexamined Patent Application Publication No. 2019-216060

### SUMMARY OF THE INVENTION

### PROBLEMS TO BE SOLVED BY THE INVENTION

As described above, using the rotation-revolution type mixer, it has become possible to produce an electrode which has not been able to be produced so far, but in the vacuum-drying step of the slurry, the electrode material portion peels off from the substrate, that is, so-called electrode peeling occurs, and the production yield may be reduced.

Therefore, an object of the present invention is to provide a method of producing an electrode capable of curbing the occurrence of such electrode peeling and improving the production yield.

### MEANS FOR SOLVING THE PROBLEMS

A method of producing an electrode in the present embodiment includes a step of kneading an electrode active material, a conductive auxiliary agent, and a binder to obtain a slurry, a step of applying the slurry onto a substrate, and a step of vacuum-drying the applied slurry, in which the kneading is performed by a heating and stirring treatment at 150°C or higher and 200°C or lower and a defoaming and stirring treatment.

In addition, a method of producing an electrode in another embodiment includes a step of kneading an electrode active material, a conductive auxiliary agent, a binder, and a solid electrolyte to obtain a slurry, a step of applying the slurry onto a substrate, and a step of vacuum-drying the applied slurry, in which the kneading is performed by a heating and stirring treatment at 150°C or higher and 200°C or lower and a defoaming and stirring treatment.

### EFFECTS OF THE INVENTION

According to the method of producing an electrode disclosed in the present embodiment, it is possible to provide a method of producing an electrode that suppresses the occurrence of electrode peeling during vacuum-drying at the time of producing the electrode and improves the production yield.

### BRIEF DESCRIPTIONS OF THE DRAWINGS

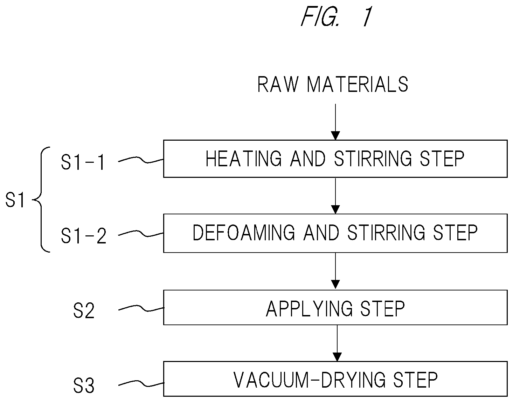

Fig. 1 is a flow for illustrating a method of producing an electrode of the present embodiment.

### DETAILED DESCRIPTION OF PREFERRED EMBODIMENT

### <Prior Considerations>

As described in the above problem, using the rotation-revolution type mixer, it has become possible to produce an electrode which has not been able to be produced so far, but electrode peeling occurs during vacuum drying of the electrode, and a production yield may be reduced.

As a result of intensive studies on the cause of such a decrease in the production yield, the present applicants have estimated that the decrease is caused by insufficient removal of moisture contained in the raw materials in the step of kneading the raw materials to obtain a slurry. That is, the present applicants consider that while heating to about 150°C during vacuum-drying, moisture remaining in the raw material is volatilized at this time, the binding force between the electrode material and the current collector (substrate) is weakened, and so-called electrode peeling in which the electrode material is peeled from the substrate occurs.

Therefore, the present inventors have found that in a kneading step of obtaining a slurry, which is a stage prior to vacuum drying, when defoaming and stirring are performed in addition to heating and stirring at a temperature of 150°C or higher, electrode peeling can be suppressed during subsequent vacuum-drying, and have completed the present invention.

### <Embodiment>

Hereinafter, embodiments will be described in detail with reference to examples and drawings. In all the drawings for describing the embodiments, members having the same function are denoted by the same or related reference numerals, and repeated description thereof will be omitted.

### [Method of Producing Electrode]

As described above, a method of producing an electrode that is an embodiment of the present invention includes a step of kneading an electrode active material, a conductive auxiliary agent, and a binder to obtain a slurry, a step of applying the slurry onto a substrate, and a step of vacuum-drying the applied slurry. Hereinafter, each step will be described in detail with reference to Fig. 1.

### [Step of Obtaining Slurry (S1)]

Prior to obtaining a slurry, various raw materials to be contained as an electrode material are prepared. Examples of the raw material prepared here include an electrode active material, a conductive auxiliary agent, and a binder. In addition, components can be added and mixed separately as long as the effects and advantages of the present invention are not impaired.

The prepared various raw materials are mixed and kneaded to form a slurry in a uniform state (Fig. 1 - step (S1)). The slurry obtained here is preferably in a sufficiently defoamed state, and in the present embodiment, this step is performed by heating and stirring treatment (Fig. 1 - heating and stirring step (S1-1)) and defoaming and stirring treatment (Fig. 1 - defoaming and stirring treatment step (S1-2)). Note that the heating and stirring treatment and the defoaming and stirring treatment can be performed simultaneously regardless of the processing order. In the following description, a case where the defoaming and stirring treatment is performed after the heating and stirring treatment is performed will be described as an example.

The step (S1-1) is characterized in that stirring is implemented while heating to a temperature at which moisture contained in the electrode material can be removed. The heating temperature at this time is, for example, preferably 150°C or higher and 200°C or lower, and more preferably 180°C or higher and 200°C or lower for the purpose of efficiently removing moisture.

By suppressing the upper limit of the heating temperature to 200°C, it is possible to mix the raw materials, particularly the binder, so as not to cause decomposition and alteration, and without causing ignition in the solvent.

In the step (S1-1), known stirring conditions can be applied, and are not particularly limited, but for example, the mixed raw material can be stirred using a stirring bar. At this time, the rotation speed of the stirring bar is preferably 50 rpm to 200 rpm, more preferably 100 rpm to 200 rpm, and still more preferably 150 rpm to 200 rpm.

In the step (S1-2), for example, a known defoaming and stirring treatment method such as vacuum depressurization treatment, ultrasonic treatment, centrifugation treatment, or rotation-revolution type stirring treatment can be applied, and among them, the rotation-revolution type stirring treatment is preferable. Regarding treatment conditions in a case where the rotation-revolution type stirring method is applied, for example, the rotation speed in the rotation-revolution type mixer is preferably 100 rpm to 1,000 rpm, and more preferably 500 rpm to 750 rpm. In addition, the revolution speed is preferably 200 rpm to 2,000 rpm, and more preferably 1,000 rpm to 1,500 rpm.

The temperature at this time may be lower than 150°C, and treatment may be performed at normal temperature (25°C). In addition, the treatment can be performed at normal pressure (1 atm), and in the case of reducing the pressure, for example, the pressure can be set to about 1.0 kPa to 0.50 kPa.

As described above, by obtaining a slurry using both the heating and stirring treatment and the defoaming and stirring treatment, the raw materials are uniformly mixed, defoaming is sufficiently performed, and at the same time, moisture in the raw materials can be sufficiently removed. By removing moisture at this stage, it is possible to suppress the occurrence of defects such as electrode peeling in a vacuum-drying step to be described later.

In a case where the heating and stirring treatment and the defoaming and stirring treatment are simultaneously performed, the step (S1-2) described above may be performed in an environment heated to 150°C to 200°C.

### [Raw Material of Electrode Material]

The constituent raw materials of the electrode material will be described below. As the raw material, an electrode active material, a conductive auxiliary agent, and a binder are typically used as described above.

As the electrode active material, a positive electrode active material can be used when a positive electrode is formed, and a negative electrode active material can be used when a negative electrode is formed without particularly limiting known materials.

Examples of the positive active material include MnO₂, LiCoO₂, LiMn₂O₄, and LiNiO₂.

On the other hand, examples of the negative electrode active material include Zn, Li, graphite, a Si-based material, and Li₄Ti₅O₁₂.

Preferable examples of the conductive auxiliary agent include carbon black such as acetylene black, and carbon materials such as graphite and carbon nanotubes, but known conductive auxiliary agents can be used without particular limitation.

Furthermore, examples of the binder include fluorine-based binders such as polyvinylidene fluoride (PVdF) and polytetrafluoroethylene (PTFE), rubber-based binders such as styrene butadiene rubber (SBR), and the like, but known binders can be used without particular limitation.

However, a solvent is required to disperse or dissolve the binder component, but in a case where water is used as a solvent for a conversion type active material such as a halide, deactivation of the active material or acidification of the slurry occurs. Deactivation of the active material may lead to a reversible decrease in electric capacity. In addition, in a state of being in contact with an acidified slurry containing a halogen compound, even if a stainless steel foil having excellent acid resistance is used, the passivation film present on the surface of the stainless steel foil is damaged, and corrosion proceeds, so that a good electrode cannot be obtained.

For this reason, a non-aqueous binder in which a binder component is dispersed or dissolved in an organic solvent is preferably used for the conversion type active material. Examples of the solvent used for the non-aqueous binder include N-methyl-2-pyrrolidone (NMP), dimethylformamide (DMF), dimethylacetamide (DMA), dimethyl sulfoxide (DMSO), ester ketones, ethers, and amines.

For the non-aqueous binder, a solvent for adjusting the viscosity can also be used as necessary. Examples of the solvent used for this purpose include, but are not particularly limited to, N-methylpyrrolidone (NMP), pyrrolidone, N-methylthiopyrrolidone, dimethylformamide (DMF), dimethylacetamide, hexamethylphosphoamide, cyclohexanone, methyl isobutyl ketone, and methyl ethyl ketone.

In this case, when the above-mentioned raw materials, that is, the electrode active material, the conductive auxiliary agent, and the binder are contained, the content ratio (mass %) of these on a mass basis, represented as electrode active material: conductive auxiliary agent: binder= x: y: z, is preferably in the ranges of 50 ≤ x ≤ 95, 2.5 ≤ y ≤ 45, and 2.5 ≤ z ≤ 45. Further, these ratios are more preferably in the ranges of 65 ≤ x ≤ 95, 2.5 ≤ y ≤ 20, and 2.5 ≤ z ≤ 15.

In the step of obtaining a slurry by kneading the raw materials described above, the components and the solvent are mixed so that the solid content is about 30% or less at the time of initial mixing, and after the heating and stirring step (S1-1), the solid content is adjusted to preferably 30% or more and 70% or less, and more preferably 40% or more and 50% or less.

By adjusting the solid content of the slurry to the above range, it is possible to avoid a situation in which the solid content is excessively low and the slurry is separated, or the solid content is excessively high and the slurry is cured, and in the next application step (S2), film breakage occurs and a film having a uniform and necessary area as an electrode cannot be obtained.

### [Step of Applying Slurry (S2)]

Subsequently, the slurry obtained in the above step (S1) is applied onto a substrate in order to obtain a plate-shaped electrode (Fig. 1- Application step (S2)).

In this step (S2), it is sufficient that the obtained slurry can be applied onto a substrate to form a coating film having a desired thickness, and a known coating method can be used without particular limitation. Examples of the coating method include extrusion coating, gravure coating, reverse roll coating, dip coating, applicator coating, doctor coating, and screen printing.

The thickness of the slurry in this coating is, for example, preferably 10 µm to 150 µm, more preferably 10 µm to 100 µm, and still more preferably 10 µm to 50 µm.

The substrate to which the slurry is applied is not particularly limited as long as it has a flat plate shape capable of forming a stable coating film. A current collector made of a metal film or the like may be provided on the surface of the substrate, and by applying the slurry onto the current collector, an electrode can be formed as it is through the next step of a vacuum-drying step which is the next step, a pressing step, a processing step such as punching and cutting, and the like, which is preferable.

The current collector may be an electron conductor that does not chemically change in the battery, and a known material can be used without particular limitation.

As the positive electrode current collector, typically, a metal material with good conductivity is preferable, and for example, a metal material such as aluminum, nickel, titanium, stainless steel, copper, or a material (primer coated foil) obtained by subjecting each of these to carbon coating is well known. In the case of using a conversion type active material, in particular, a current collector having a wide potential window is preferable because a high capacity can be obtained by performing charging and discharging in a wide voltage range. As a material of such a current collector, stainless steel (for example, stainless steel foil) is preferable. Stainless steel includes, but is not particularly limited to, a ferrite type, a martensite type, an austenite type, and the like depending on its structure. The thickness of the positive electrode current collector is not particularly limited, but is appropriately about 5 µm to 50 µm, and more preferably about 8 µm to 30 µm from the viewpoint of the balance between the capacity density of the battery and the strength of the current collector.

As a material of the negative electrode current collector, typically, a metal material with good conductivity is preferable, and for example, copper (for example, copper foil) or an alloy mainly composed of copper can be used. The thickness of the negative electrode current collector is not particularly limited, but is appropriately about 5 µm to 50 µm, and more preferably about 8 µm to 30 µm from the viewpoint of the balance between the capacity density of the battery and the strength of the current collector.

### [Step of Vacuum-drying Slurry (S3)]

Next, the slurry applied to the current collector obtained in the step (S2) is vacuum-dried to obtain an electrode active material layer (coating film) (Fig. 1 - step of vacuum-drying (S3)).

This step (S3) can be implemented, for example, by reducing the pressure to 1.0 kPa or less and heating to 150°C or higher. The pressure at this time is preferably 1.0 kPa to 0.50 kPa, and the temperature is preferably 150°C to 170°C.

In the present embodiment, by performing the step (S1) described above, occurrence of electrode peeling and the like in the step (S3) can be suppressed.

As described above, the characteristic part in the electrode producing in the present embodiment has been described, but as a subsequent step, the electrode for a battery can be obtained by performing compression molding by a roller press or the like as necessary to obtain a predetermined thickness, and then performing processing by punching or cutting to a predetermined width and length. The electrode thus obtained can be combined with other components to form a battery by a known method.

### <Improvement Example>

Although the method of producing an electrode has been described above, in the present embodiment, the electrode material can also be used for an all-solid-state battery as described below. In the implementation of this improvement example, the operation and application conditions related to the producing are the same as those of the method of producing an electrode described above except that the electrode material is different, and thus the repeated description thereof will be omitted.

### [Raw Material of Electrode Material]

The raw material of the electrode material in this improvement example will be described below. The raw materials typically include an electrode active material, a conductive auxiliary agent, a binder, and a solid electrolyte. This improvement example is characterized in that a solid electrolyte is added to the raw material described above. This electrode material is suitable for an all-solid-state battery configured by disposing a solid electrolyte layer between a positive electrode layer and a negative electrode layer.

Here, a positive electrode active material is used when forming a positive electrode, and a negative electrode active material is used when forming a negative electrode, and any known material can be used for these materials without any particular limitations.

Examples of the positive electrode active material used here preferably include, in addition to those described above, a conversion type (also referred to as a decomposition and regeneration reaction type) or an alloy reaction type active material, and for example, CuCl₂, FeF₂, S, AgCl, FeCl₃, NiCl₂, CoCl₂, FeCl₂, Li₂S, LiCl, LiF, AgF, Br₂, LiBr, CoF₃, CuF₂, CuF, BiF₃, CuCl₂, NiF₂, LiI, I₂, CoF₂, FeF₃, MnF₃, CrF₃, CuS, Li₂Se, Se, CuSe, Cu₂O, CoS₂, Cu₂S, NiS, FeS₂, Te, Li₂Te, VF₃, FeS, CoSe₂, MnS₂, MnCl₂, Co₃S₄, FeSe, TiF₃, MnS, and the like are preferable. Among them, CuCl₂, FeF₂, and S are preferable.

The conversion type active material corresponds to, for example, a halogenated transition metal (CuCl₂, FeF₂, FeCl₃, or the like) or an alkali metal halide (LiCl, LiF, or the like), and is charged and discharged by a chemical reaction accompanied by decomposition and generation occurring between lithium and a metal compound. On the other hand, examples of the alloy reaction type active material include Si, SiO, Sn, and SnCl₂, and charge and discharge are performed by a reaction accompanying the formation of the Li alloy phase.

These positive electrode active materials are contained as particles, and the average particle size (D50) based on a laser diffraction and scattering method is preferably about 0.1 µm to 20 µm, and more preferably about 0.4 µm to 10 µm.

Examples of the negative electrode active material used here include conversion type active materials such as Si-based, Li-based, Sn-based, Mg-based, and Al-based active materials, alloy reaction type active materials, and dissolution and precipitation reaction type active materials. Among them, Si-based, Li-based, Mg-based, and Al-based active materials are preferable in terms of a high energy density per weight or per volume.

Incidentally, the dissolution and precipitation reaction type active material corresponds to, for example, metal Li, metal Na, and the like, and charging and discharging are performed as these metal phases are dissolved and precipitated.

Examples of the Si-based negative electrode active material include Si, a mixture of Si and SiO₂ in which a composition ratio of Si and O is represented by 1 : a (here, 0.05 < a < 1.95), a mixture of Si and SiC in which a composition ratio of Si and C is represented by 1 : b (here, 0 < b < 1), and a mixture of Si and Si₃N₄ in which a composition ratio of Si and N is represented by 1 : c (here, 0 < c < 4/3).

In addition, other examples of the Si-based negative electrode active material include an alloy material composed of Si and an element other than Si. Examples of the element other than Si herein include Fe, Co, Sb, Bi, Pb, Ni, Cu, Zn, Ge, In, Sn, Ti, or the like.

Examples of the Sn-based negative electrode active material include Sn, Sn oxide, Sn nitride, an Sn-containing alloy, and solid solutions thereof. Some of the Sn atoms contained therein may be substituted with one or more elements other than Sn.

Examples of the Sn oxide include tin oxide (SnO_{d} (0 < d < 2)), tin dioxide (SnO₂), or the like. Examples of the Sn-containing alloy include an Ni-Sn alloy, an Mg-Sn alloy, an Fe-Sn alloy, a Cu-Sn alloy, a Ti-Sn alloy, or the like. Examples of the Sn compound include SnSiO₃, Ni₂Sn₄, Mg₂Sn, or the like.

Examples of the Li-based negative electrode active material include Li, an In-Li alloy, an Al-Li alloy, an Mg-Li alloy, a Zn-Li alloy, an Sn-Li alloy, an Sb-Li alloy, or the like.

Examples of the Mg-based negative electrode active material include Mg, an Ni-Mg alloy, an Sn-Mg alloy, an Fe-Mg alloy, a Cu-Mg alloy, a Ti-Mg alloy, or the like.

Examples of the Al-based negative electrode active material include Al, an Ni-Al alloy, an Sn-Al alloy, an Fe-Al alloy, a Cu-Al alloy, a Ti-Al alloy, or the like.

These negative electrode active materials are contained as particles, and the average particle size (D50) based on a laser diffraction and scattering method is suitably, for example, about 1 µm to 20 µm, and particularly preferably about 2 µm to 10 µm.

Examples of the solid electrolyte that can be used here include various oxide-based solid electrolytes or sulfide-based solid electrolytes.

Preferred examples of the oxide-based solid electrolyte include crystalline oxides having a NASICON structure, a garnet structure, a perovskite structure, or the like. For example, those represented by the general formula LiₓAO_{y} (here, A is B, C, Al, Si, P, S, Ti, Zr, Nb, Mo, Ta, or W, and x and y are positive numbers) can be mentioned. Specific examples include Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄, or the like. In addition, preferred examples also include glass or glass ceramics having no specific crystal structure, such as Li₂O-B₂O₃-P₂O₅-based, Li₂O-SiO₂-based, Li₂O-B₂O₃-based, Li₂O-B₂O₃-ZnO-based, or the like.

In particular, a sulfide-based solid electrolyte is preferably used from the viewpoint of having high ion conductivity. Examples thereof include glass or glass ceramics such as Li₂S-SiS₂-based, Li₂S-P₂S₃-based, Li₂S-P₂S₅-based, Li₂S-GeS₂-based, Li₂S-B₂S₃-based, Li₃PO₄-P₂S₅-based, and Li₄SiO₄-Li₂S-SiS₂-based.

From the viewpoint of achieving higher ionic conductivity, use of a Li₂S-based solid solution composed of Li₂S and lithium halide (for example, LiCl, LiBr, LiI) is preferable. Preferred examples include LiBr-Li₂S-P₂S₅, LiI-Li₂S-P₂S₅, LiBr-LiI-Li₂S-P₂S₅, or the like.

These solid electrolytes are used in the form of particles, and the average particle size (D50) based on the laser diffraction and scattering method is preferably, for example, 0.1 µm to 10 µm, more preferably 0.4 µm to 5 µm.

### Examples

Hereinafter, the present embodiment will be described in more detail with reference to examples.

### (Examples 1 to 9, Comparative Example 1)

First, copper chloride (CuCl₂) was prepared as the positive electrode active material, acetylene black as a conductive auxiliary agent, polyvinylidene fluoride (PVdF) as a binder, and Li₂O-Al₂O₃-SiO₂-P₂O₅-TiO₂ as a solid electrolyte.

These raw materials were kneaded using N-methyl-2-pyrrolidone (NMP) as a solvent so that the raw materials were mixed as described in Table 1 to obtain a slurry. In the kneading, first, while heating at 180°C, the mixture was dehydrated and stirred for 2 hours with the rotation speed of the stirring bar set to 50 rpm, and then defoamed and stirred for 5 minutes at normal pressure, a rotation speed of 500 rpm, and a revolution speed of 1,000 rpm by a rotation-revolution type mixer (THINKY MIXER (Trade name, manufactured by THINKY CORPORATION)) to obtain a slurry for coating. The solid content after formation of the slurry for coating obtained here is shown in Table 1. In Comparative Example 1, at the time of kneading, the heating and stirring treatment was not performed, and the defoaming and stirring treatment was immediately performed to obtain a slurry.

The slurry was applied onto a copper or stainless steel substrate to have a thickness of 150 µm using a bar coater, and vacuum-dried at 60°C or 80°C for 12 hours to form a coating film. The obtained coating film was pressed to have a thickness of 70 µm, punched, and further vacuum-dried at 150°C to obtain a positive electrode.

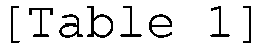

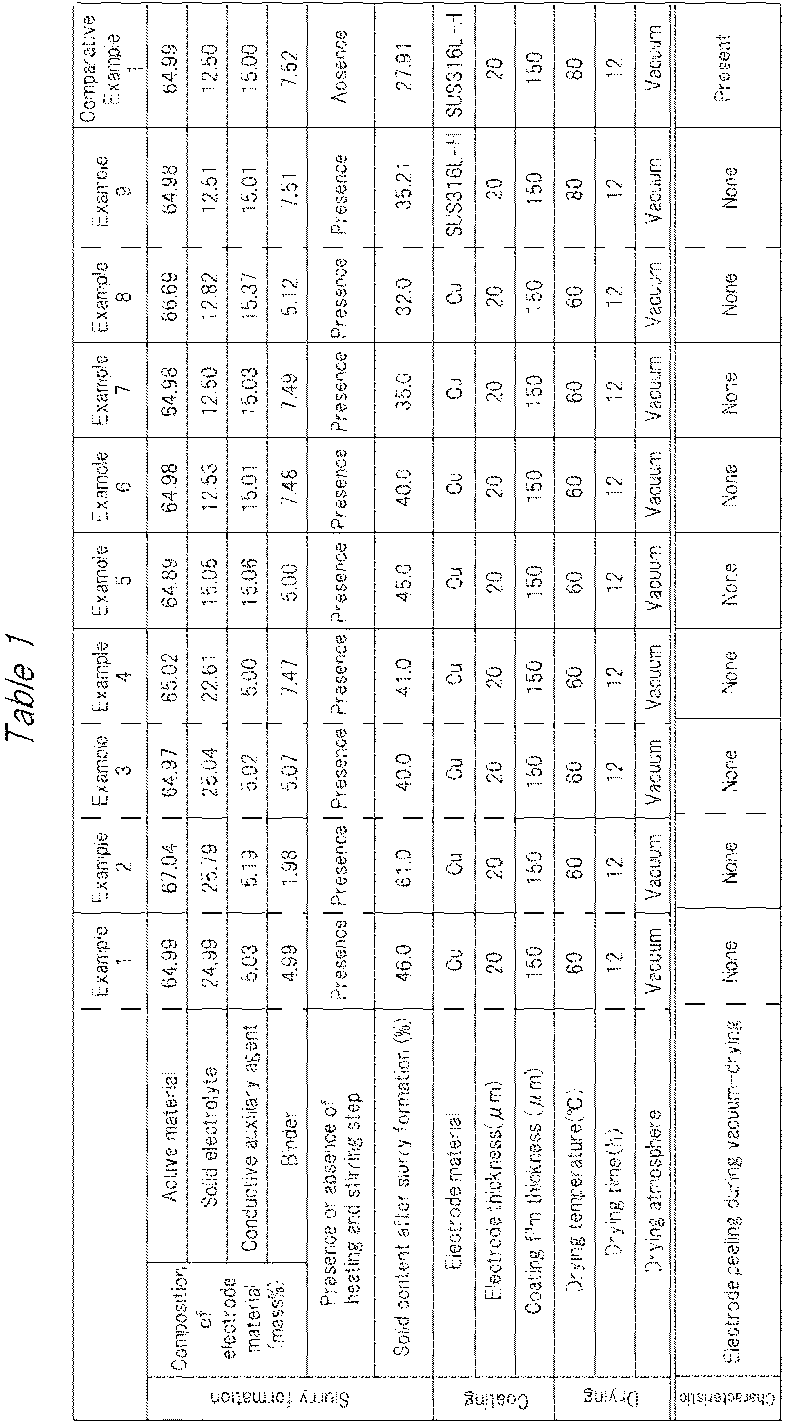

At this time, in Examples 1 to 9 in which the heating and stirring step was performed in the step of obtaining a slurry, electrode peeling did not occur during vacuum-drying. On the other hand, in Comparative Example 1, when the raw material was kneaded with a rotation-revolution mixer without undergoing the heating and stirring step, electrode peeling occurred during vacuum-drying.

Although the present invention has been specifically described above with reference to the embodiments, the present invention is not construed as being limited to these embodiments, and it goes without saying that various modifications can be made without departing from the gist of the present invention.

## Claims

1. A method of producing an electrode, the method comprising: a step of kneading an electrode active material, a conductive auxiliary agent, and a binder to obtain a slurry; a step of applying the slurry onto a substrate; and a step of vacuum-drying the applied slurry, wherein the kneading is performed by a heating and stirring treatment at 150°C or higher and 200°C or lower and a defoaming and stirring treatment.

2. The method of producing an electrode according to claim 1, wherein the heating and stirring treatment is performed at 180°C or higher and 200°C or lower.

3. The method of producing an electrode according to claim 1, wherein, when a content ratio on a mass basis between the electrode active material, the conductive auxiliary agent, and the binder is represented as electrode active material : conductive auxiliary agent : binder = x : y : z, the content ratios (mass%) are in a range of 50 ≤ x ≤ 95, 2.5 ≤ y ≤ 45, and 2.5 ≤ z ≤ 45.

4. A method of producing an electrode, the method comprising: a step of kneading an electrode active material, a conductive auxiliary agent, a binder, and a solid electrolyte to obtain a slurry; a step of applying the slurry onto a substrate; and a step of vacuum-drying the applied slurry, wherein the kneading is performed by a heating and stirring treatment at 150°C or higher and 200°C or lower and a defoaming and stirring treatment.

5. The method of producing an electrode according to claim 4, wherein the heating and stirring treatment is performed at 180°C or higher and 200°C or lower.

6. The method of producing an electrode according to claim 4, wherein, when a content ratio on a mass basis between the electrode active material, the conductive auxiliary agent, the binder, and the solid electrolyte is represented as electrode active material: conductive auxiliary agent : binder : solid electrolyte = x : y : z : v, the content ratios (mass%) are in a range of 50 ≤ x ≤ 92.5, 2.5 ≤ y ≤ 45, 2.5 ≤ z ≤ 45, and 2.5 ≤ v ≤ 45.

7. The method of producing an electrode according to claim 4, wherein the electrode active material is a positive electrode active material.

8. The method of producing an electrode according to claim 7, wherein the electrode active material is a conversion type active material or an alloy reaction type active material.

9. The method of producing an electrode according to claim 8, wherein the electrode active material is made of a material selected from CuCl₂, FeF₂, and S.

10. The method of producing an electrode according to claim 9, wherein stainless steel is used as a current collector material.

11. The method of producing an electrode according to claim 9, wherein a non-aqueous binder is used as the binder.
